# EUROPEAN PATENT APPLICATION

(11) **EP 1 854 374 A1**
(43) Date of publication of application: **14.11.2007**
(21) Application number: 05815925.2
(22) Date of filing: 14.11.2005
(51) Int. Cl.: A47B 13/06, F16B 12/50, F16B 12/52

(54) **TABLE WHICH IS MADE FROM STEEL, ALUMINIUM OR OTHER TUBULAR OR HOLLOW MATERIALS, COMPRISING SELF-FIXING PARTS**

(30) Priority: 30.11.2004 ES 200402874
(71) Applicant: Munoz Godoy, David, 08303 Mataro Barcelona (ES); Gonzalez Llorens, Rafael, 08303 Mataro, Barcelona (ES)
(72) Inventor: Munoz Godoy, David, 08303 Mataro Barcelona (ES); Gonzalez Llorens, Rafael, 08303 Mataro, Barcelona (ES)
(74) Representative: Isern-Jara, Nuria
(86) International application number: PCT/ES2005/000613
(87) International publication number: WO 2006/058935

(57) **Abstract**

Table made of steel, aluminium or other tubular or box section materials with self fitting pieces that consists of two pairs of pieces (1) and (2) made up of sides and ends whose ends are mitre cut or bevelled, that have slits (3) next to their ends which are introduced into slits (5) placed in vertically positioned pieces (4) in the form of legs, wherein other fixing or attaching elements are not employed, and fitted with corner reinforcement parts (6) of elastomeric material located in the lower portion of the stated legs (4).

## Description

### OBJECT OF THE INVENTION

This invention refers to a table made of steel, aluminium or other tubular or box section materials with self fitting pieces, whose purpose lies in providing the user or customers of the manufacturing companies with a product that, made up as a table, does not require in any way the use of auxiliary materials to secure the pieces together, becoming fixed in an automatic manner by virtue of the presence of slits, at points close to the edges on the support legs at points close to the edges into which the sides and ends are introduced, that make the incorporation of some pieces on top of others for the purpose of achieving a totally automatized table.

### FIELD OF THE INVENTION

The application of this invention is within the industry involved in the manufacture of furniture and, more specifically, metallic tables.

### BACKGROUND TO THE INVENTION

The applicant has knowledge of the present use and utilisation of a multitude of pieces manufactured in metallic materials from which the configuration of a table is managed, forming an upper area positioned horizontally generally rectangular fitted with a sheet of glass or plastic material from which protrude vertical elements that act as legs.

The union among them of the pieces making up the upper board requires the use of retaining elements, that make the union of the side walls with the end walls and, at the same time, need the use of pieces protruding from the board thus made, that provide the union with the four legs or vertically positioned support points.

Obviously, the assembly of these pieces requires on one hand the use of auxiliary labour with the consequent additional assembly cost and, at the same time, requires, in the case of the dismantling being required, a reverse operation, it not being able to carry out both the assembly and equally the dismantling without the use of suitable tools to make the joining of the pieces to each other.

The obvious solution to the above discussed problems existing nowadays in this field would be to have a table that although preferable manufactured in steel, would permit to be assembled with all of each forming parts without the use of auxiliary elements, materials or tools.

However, the applicant has no knowledge of the existence at the present time of an ideal invention that is provided with the above stated characteristics.

It is known by applicant from patent US 1.964.656 in the name of P.E Huetten, 1 October of 1923. This document discloses a assembly system for a metallic table wherein released attaching elements such as screws or similar are not required, but it requires welding points in order to provide a fixing among their elements.

The precision reached in the cuts is not sufficient to get that horizontal rods can fit properly so that the finish is aesthetic, and therefore an upper protective cap to hide this unions is required. This lack of precision makes impossible that the union can be by mitre cut or another attaching system by insert between the rods.

On the other hand, the solution described in US 1.694.656 require elimination of material on upright legs in order to obtain an insert through which the horizontal rod is introduced and allowing that this is level with upright leg, hidden, in order to attach the trim onto upper side. This system for eliminating material makes that hollow profile corresponding to the leg is weaker than in the case of slits on the leg are made. The manufacturing of U-shaped profile requires an additional pressing operation for each one of faces of the legs to be pierce. The dimensional precision of the profile is lower than that obtained by current techniques such as cutting by laser technology.

Another document close to current prior art known by applicant is patent US 2004/0177793 in the name of Chun-Yi Lai, 16 September of 2004. This document describes another snap fitting system which also requires a fitting in order to horizontal rods are level and so attaching a trim. This document does not solve the problem of union among pieces since it requires screws or similar for its fixing, and it has the same drawbacks in relation to the above-mentioned U-shaped cutting.

### DESCRIPTION OF THE INVENTION

The table made of steel, aluminium or other tubular or box section materials with self fitting pieces that the invention proposes has all of the determining characteristics of an item of furniture as a table, that allows it to be fixed together without the use of any additional elements or tools, being perfectly adjusted and with total strength.

In a more specific manner, the table made of steel, aluminium or other tubular or box section materials with self fitting pieces object of the invention is made up from two pieces making up the sides whose ends are cut at a 45° angle or a bevel, into which the ends are fitted equally finished off with a similar configuration to the sides, and both being manufactured in stainless steel.

Coinciding with the points nearest to the ends of the pieces making up the sides and the ends some slits have been provided coming from the lower area of these pieces, for the purpose of providing for their introduction into tubular box section bodies forming the legs, which at the same time have slits made in the area corresponding to the rear edge and the opposing area of the same side in which two shorter longitudinal slits have been provided, consequently, on making the introduction by means of the slits both for the side pieces and equally for the end pieces in addition to the legs, the immovability of the complete assembly is achieved for the eight pieces.

The slits have a complementary length so that width of the piece of kind (1) or (2) is the sum of both slits. In this manner, these pieces are level with upper side of the leg, so an upper finish of the table can be configured without requiring an additional beautifying piece which completes the set of assembled pieces.

The slits are made by laser technology, whereby providing a higher precision with respect to other methods used with the same purpose in the prior art, and allowing fitting of the pieces with a short dimensional tolerance, so that it can be visible obtaining a nice aesthetic. It allows that the upper piece can be made up of transparent material such as glass.

It must be stated that at the lower end of the box sections forming the legs, it has been planned to incorporate ends made from an elastomeric material to prevent damage to the surface of the floor on which the table stands.

On the other hand, each one of the joints at the corners of the table may have an upper protective cap in such a way that it gives a better external appearance in the case of the table.

### DESCRIPTION OF THE DRAWINGS

In order to complete the description that is being made and for the purpose of giving a greater understanding of the characteristics of the invention, in accordance with the preferred embodiment carried out this present descriptive memorandum is accompanied by a set of drawings, which is illustrative but not limiting, where the most significant details are as follows.

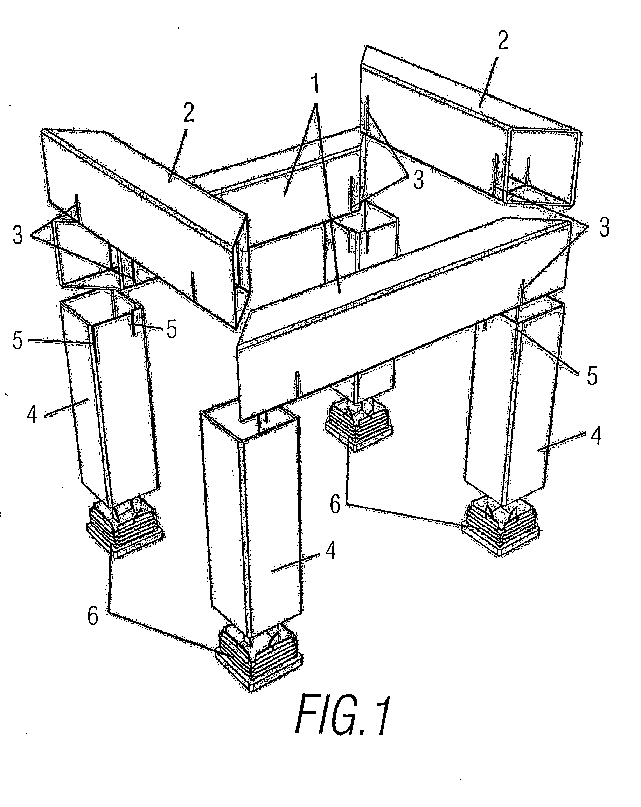

Figure 1 shows a perspective view of all of the pieces without them being joined together that is the object of the invention corresponding to a table made of steel, aluminium or other tubular or box section materials with self fitting pieces.

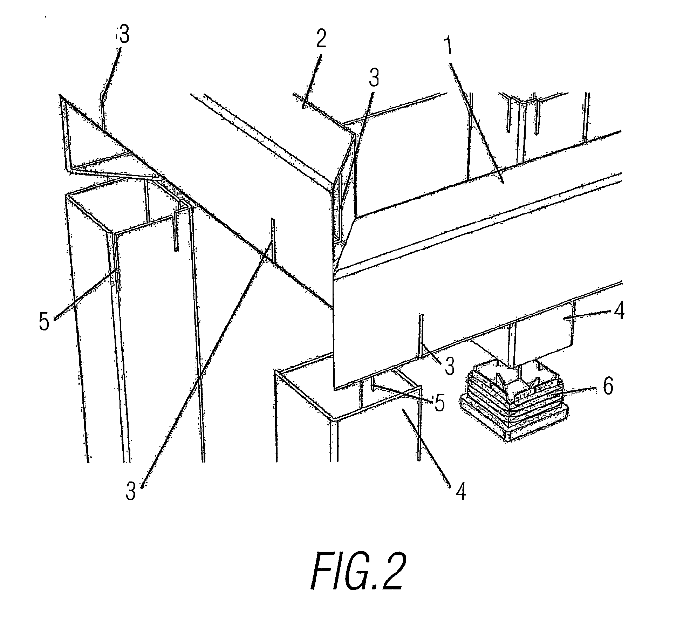

Figure 2 shows a detailed view of one side of the object shown in figure number 1, in which the assembly method for the connecting of the pieces to each other can be appreciated.

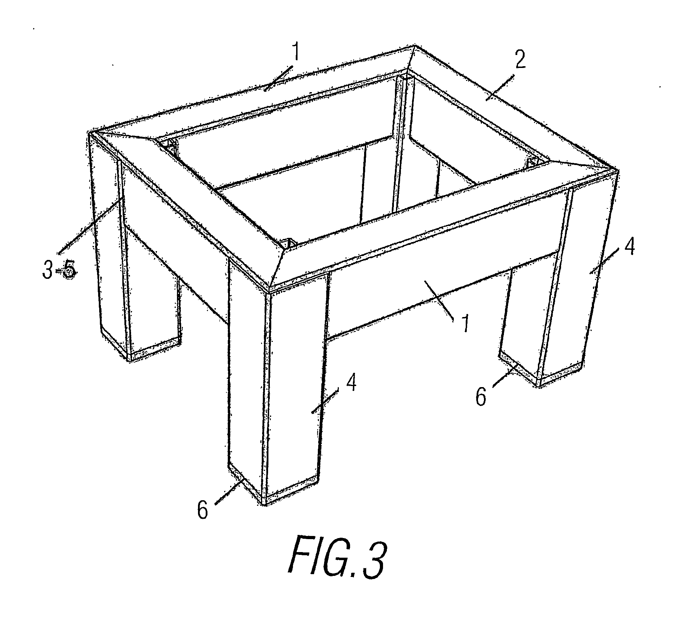

Figure 3 shows a perspective view of the invention whose pieces appear completely assembled.
Figure 4 shows a perspective view of a protective cap located on the upper part of the tubular components.
Figure 5 shows a perspective view of the assembled structure having greater longitudinal dimensions.

### PREFERRED EMBODIMENT OF THE INVENTION

In view of the figures commented on it can be seen that the table made of steel, aluminium or other tubular or box section materials with self fitting pieces is made up from two hollow pieces (1) making the sides and two similar pieces (2) making the ends, both the pieces (1) and equally the pieces (2) having their ends cut with a bevel or at a 45° angle.

At points close to the ends of the pieces (2) slits (3) have been made positioned vertically emerging from the lower area, and the pieces (1) have equally been provided with slits (3) that emerge from the lower area at points close to their ends for the purpose of achieving, by virtue of said slits (3) the parts (1) and (2) may encase within parts (4) having the slits (5), obtaining that given the introduction of parts (1) and (2) within said parts (4) through the slits (5) of said parts (4) and the slits (3) existing in parts (1) and (2), the parts (4) embrace the upper portion of parts (1) and (2) being duly assembled, protruding in the internal corners of the assembly formed by parts (1) and (2) structures formed by slits (5) which embrace the inner part of the frame constituting the upper structure of the table.

In order to avoid damage to the surface of the floor it has been planned to incorporate ends (6) made from an elastomeric material introduced into the lower ends of pieces (4).

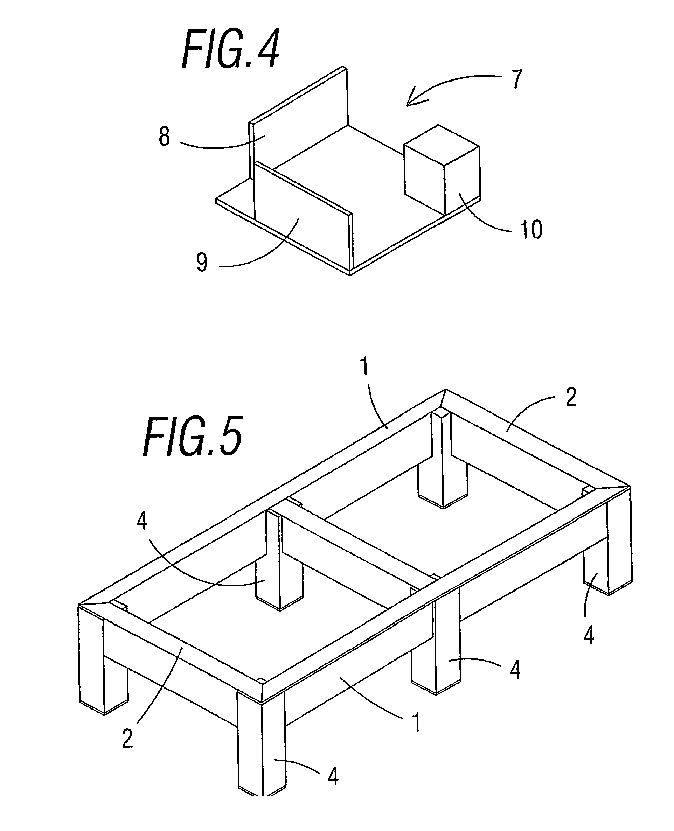

Optionally, each one of the unions of the table corners can have an upper protective cap (7) (see figure 4) made from a plastic material body that is made from a noticeably square flat bottomed base that has two laminar extensions (8, 9) in an upward direction arranged at a right angle to each other, each one of these extensions aimed at fitting in the space made by the outer wall of the tubular parts (1) and (2) and the inner wall of parts (4). In addition, said protective cap (7) includes a square shaped snug or slug (10) orientated in a downward direction to fit in the space in a assembly condition that is situated at the most inner corner of each one of the parts (4). The snug (10) may have a through hole (not shown) arranged axially and longitudinally to fit a screw element to allow for the expansion of the side walls of said snug (10) thus guaranteeing a non-easily releasable fix and improving the fitting between part (1) and (2).

It must be mentioned that the protective cap (6) in the figure 4 have been shown in an opposite position to that of the fixing to make the understanding easier of the easier of the different parts that make it up.

It is also worth mentioning that in the event of using components (1) and (2) of a considerable length some other components (4) can be fitted in to prevent any possibility of sagging or low strength of the components (1) and (2), said components (1), (2) and (4) having been fitted with slots for the fixing of same or also fitting in two or more components (1) and (2) lined up and fitted into the intermediate components (4) all of which forms a modular structure, as shown in figure 5 attached.

## Claims

1. A table made of steel, aluminium or other tubular or box section materials with self fitting pieces, **characterized in that** consists of two pairs of tubular pieces (1) and (2) making the sides and ends of the upper part of a table, whose ends are mitre cut or bevelled at an angle of 45° and incorporating slits (3) near their ends of the lower parts of pieces (1) and (2), into which there are slits (5) placed in vertically positioned pieces (4) in the form of legs and two slits (5) in the opposite edge and wherein other fixing or attaching elements are not employed.

2. A table made of steel, aluminium or other tubular or box section materials with self fitting pieces according to first claim, **characterised in that** pieces (1), (2) and (4) making up the sides, ends and legs are manufactured in stainless steel in box sections.

3. A table made of steel, aluminium or other tubular or box section materials with self fitting pieces according to the previous claims, **characterised in that** pieces (4) are located externally in the area to the rear and side of pieces (1) and (2).

4. A table made of steel, aluminium or other tubular or box section materials with self fitting pieces according to the first claim, **characterised in that** the lower area of pieces (4) making up the legs are fitted with ends (6) made from an elastomeric material.

5. A table made of steel, aluminium or other tubular or box section materials with self fitting pieces according to the first claim, **characterised in that** each one of unions of the corners in the table comprises an upper protective cap (7).

6. A table made of steel, aluminium or other tubular or box section materials with self fitting pieces according to the fifth claim, **characterised in that** the upper protective cap (7) comprises a plastic material body formed by a square flat base having two laminar extensions (8, 9) in an upward direction arranged at a right angle to each other, each one of said extensions fitting into a space left between outer wall of the tubular bodies (1, 2) and inner wall of the parts (4).

7. A table made of steel, aluminium or other tubular or box section materials with self fitting pieces according to the claims fifth and sixth, **characterised in that** protective cap (7) comprises a snug (10) arranged in a downward direction to fit into a hole in the most inner corner of each one of the parts (4) in an assembled condition of the table.

8. A table made of steel, aluminium or other tubular or box section materials with self fitting pieces according to the claim eighth, **characterised in that** the snug (10) comprises an axially arranged through hole.

## Amended claims

### Amended claims under Art. 19.1 PCT

**1.** A table made of steel, aluminium or other tubular or box section materials with self fitting pieces, **characterized in that** consists of two pairs of tubular pieces (1) and (2) making the sides and ends of the upper part of a table, whose ends are mitre cut or bevelled at an angle of 45° and incorporating slits (3) near their ends of the lower parts of pieces (1) and (2), into which there are slits (5) placed in vertically positioned pieces (4) in the form of legs and two slits (5) in the opposite edge and wherein other fixing or attaching elements are not employed.
